# EUROPEAN PATENT APPLICATION

(11) **EP 4 679 053 A1**
(43) Date of publication of application: **14.01.2026**
(21) Application number: 24187287.8
(22) Date of filing: 09.07.2024
(51) Int. Cl.: G01N 1/22

(54) **TUBE AND ANALYSIS SYSTEM**

(71) Applicant: Netzsch-Gerätebau GmbH, 95100 Selb (DE)
(72) Inventor: Sato, Kenta, Kanagawa, 221-0022 (JP)
(74) Representative: Scott, Stephen John

(57) **Abstract**

The present disclosure provides a tube and an analysis system that are capable of analyzing an analysis target gas discharged from a thermal analysis device or the like with accuracy. A tube (transfer tube 23) according to the present disclosure is a tube for supplying an analysis target gas discharged from a thermal analysis device 10, a heating furnace, or a heating furnace-type pyrolyzer to a gas analysis unit 80, and the tube includes an outer cylinder portion 23a formed of metal and an inner cylinder portion 23b formed of fluororesin, the inner cylinder portion 23b being arranged inside the outer cylinder portion 23a in the radial direction.

## Description

### TECHNICAL FIELD

The present disclosure relates to a tube and an analysis system.

### BACKGROUND

In order to determine the weight change associated with the thermal decomposition of a substance, or such characteristics as adsorption and desorption, frequently applied technology includes: a thermogravimetry (hereinafter referred to as "TG") that quantifies the weight change while changing the temperature of a sample; a differential thermal analysis (hereinafter referred to as "DTA") that measures the relative temperature change of a sample with reference to a reference substance associated with a phase transition or reactions; and TG-DTA that performs these measurements simultaneously (Simultaneous Thermal Analysis; hereinafter referred to as "STA").

In the TG and STA described above, the gas generated accompanying the change in the weight of the sample cannot be identified. Therefore, as an effective means, a method is known wherein gas generated from a TG or STA device is introduced into a mass spectrometer (hereinafter referred to as "MS") to perform MS measurement in real time, synchronously with the TG or STA (TG-MS or STA-MS) (see, for example, Non-Patent Literature (NPL) 1).

### CITATION LIST

### Non-patent Literature

NPL 1: KINOSHITA, R., et al., "Optimization of TG/DTA-MS Measuring Conditions and Application to Material Analysis", J. Mass Spectrum. Soc. Jpn, 1998, Vol. 46, No. 4, p. 365

### SUMMARY

### (Technical Problem)

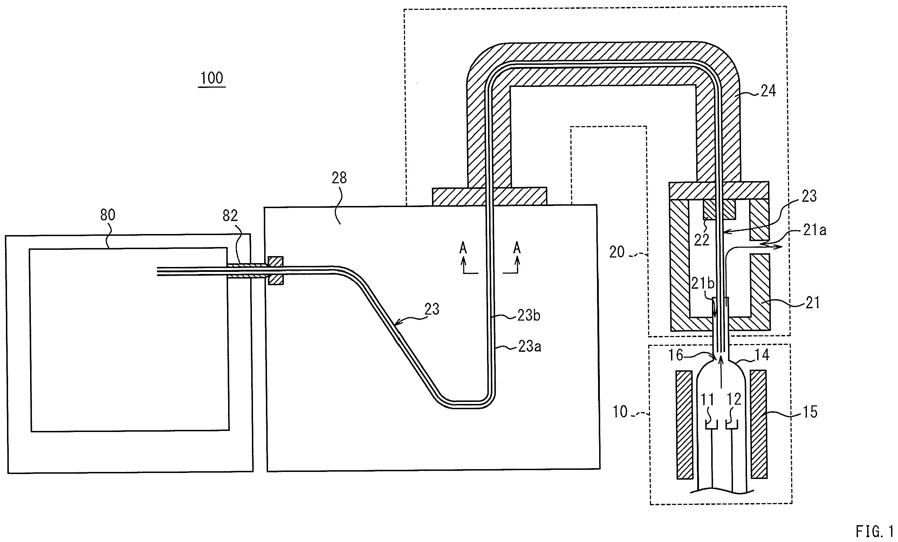

In the STA-MS (for example, illustrated in FIG. 1) disclosed in NPL 1, an analysis target gas generated in the STA is supplied to the mass spectrometer via a glass capillary tube, for example. However, when the analysis target gas contains fluorine, the analysis target gas may react with the capillary tube to fail to accurately perform mass spectrometry. Moreover, when polytetrafluoroethylene (PTFE) or the like is used for the capillary tube, the reaction with the analysis target gas containing fluorine can be suppressed, but oxygen penetrates through the capillary tube made of PTFE from the outside, and the analysis target gas thus may react with oxygen. There is thus room for improvement in these points.

The present disclosure has been made in view of the problems as noted above, and it could be helpful to provide a tube and an analysis system that are capable of analyzing an analysis target gas discharged from a thermal analysis device or the like with accuracy.

### (Solution to Problem)

For solving the problem as noted above, the present disclosure provides
[1]
   a tube for supplying an analysis target gas discharged from a thermal analysis device, a heating furnace, or a heating furnace-type pyrolyzer to a gas analysis unit, the tube including:
   an outer cylinder portion formed of metal; and
   an inner cylinder portion formed of fluororesin, the inner cylinder portion being arranged inside the outer cylinder portion in the radial direction.
   In the tube according to the present disclosure,
[2]
   with the configuration of [1] above, it is preferred that the inner cylinder portion contains at least any one of polytetrafluoroethylene, modified polytetrafluoroethylene, perfluoroalkoxyalkane, ethylene-tetrafluoroethylene, fluorinated ethylene propylene, or polyvinylidene fluoride.
   In the tube according to the present disclosure,
[3]
   with the configuration of [1] or [2] above, it is preferred that the outer cylinder portion contains at least any one of stainless steel, copper, or aluminum.
   In the tube according to the present disclosure,
[4]
   with the configuration according to any one of [1] to [3] above, it is preferred that the outer cylinder portion has an inner surface with a diameter of 2 mm or less.
   In the tube according to the present disclosure,
[5]
   with the configuration according to any one of [1] to [4] above, it is preferred that the longitudinal direction has a length of 50 cm or more.
   In the tube according to the present disclosure,
[6]
   with the configuration according to any one of [1] to [5] above, it is preferred that the inner cylinder portion has an inner surface with a diameter of 0.8 mm or less.
   In the tube according to the present disclosure,
[7]
   with the configuration according to any one of [1] to [6] above, it is preferred that a space to which an inert gas is suppliable from the outside is provided between the inner cylinder portion and the outer cylinder portion.
   For solving the problem as noted above, the present disclosure provides
[8] an analysis system including:
   a thermal analysis device, a heating furnace, or a heating furnace-type pyrolyzer;
   a gas analysis unit that analyzes an analysis target gas discharged from the thermal analysis device, the heating furnace, or the heating furnace-type pyrolyzer; and
   a tube for supplying the analysis target gas discharged from the thermal analysis device, the heating furnace, or the heating furnace-type pyrolyzer to the gas analysis unit,
   wherein the tube includes:
      an outer cylinder portion formed of metal; and
      an inner cylinder portion formed of fluororesin, the inner cylinder portion being arranged inside the outer cylinder portion in the radial direction.
   In the analysis system according to the present disclosure,
[9]
   with the configuration according to [8] above, it is preferred that an inert gas is supplied from the outside to a space between the inner cylinder portion and the outer cylinder portion.
   For solving the problem as noted above, the present disclosure provides
[10]
   an analysis system including:
   a thermal analysis device, a heating furnace, or a heating furnace-type pyrolyzer;
   a gas analysis unit that analyzes an analysis target gas discharged from the thermal analysis device, the heating furnace, or the heating furnace-type pyrolyzer; and
   a tube for supplying the analysis target gas discharged from the thermal analysis device, the heating furnace, or the heating furnace-type pyrolyzer to the gas analysis unit,
   wherein the tube includes:
      a tubular outer cylinder portion; and
      an inner cylinder portion formed of fluororesin, the inner cylinder portion being arranged inside the outer cylinder portion in the radial direction, and
   an inert gas is supplied from the outside to a space between the inner cylinder portion and the outer cylinder portion.

### (Advantageous Effect)

The present disclosure makes it possible to provide a tube and an analysis system that are capable of analyzing an analysis target gas discharged from a thermal analysis device or the like with accuracy.

### BRIEF DESCRIPTION OF THE DRAWINGS

In the accompanying drawings:
FIG. 1 is a view illustrating the configuration of the analysis system according to a first embodiment of the disclosure;
FIG. 2 is a cross-sectional view along line A-A in FIG. 1;
FIG. 3 is a view illustrating the configuration of the analysis system according to a second embodiment of the disclosure;
FIG. 4 is a view illustrating the configuration of the analysis system according to a third embodiment of the disclosure;
FIG. 5 is a cross-sectional view along line B-B in FIG. 4;
FIG. 6 is a detailed view of part C in FIG. 4; and
FIG. 7 is an enlarged view of a part including a thermal analysis device and a heating adapter in FIG. 4.

### DETAILED DESCRIPTION

Hereinafter, embodiments according to the present disclosure will be described in detail with reference to the drawings.

FIG. 1 is a view illustrating the configuration of an analysis system 100 according to a first embodiment of the disclosure. The analysis system 100 according to this embodiment includes: a thermal analysis device 10 such as a TG device; a gas analysis unit 80 for performing mass spectrometry, etc. on an analysis target gas that is generated and discharged by thermal analysis in the thermal analysis device 10; a gas transfer unit 20 including a transfer tube 23 (tube) for transferring the analysis target gas discharged from the thermal analysis device 10 to the gas analysis unit 80; and a heating unit 28, such as an oven, that heats the analysis target gas before supplying it to the gas analysis unit 80.

The thermal analysis device 10 is, for example, a TG device and is a device that performs thermogravimetry for quantifying the change in weight while changing the temperature of a sample. As illustrated in FIG. 1, the thermal analysis device 10 heats the sample placed on a sample container 11 and the reference substance placed on a sample container 12 with a heater 15 in a heating furnace 14, and measures the weight difference between the sample and the reference substance with an electromagnetic electronic balance to thereby measure the sample temperature and the weight change of the sample. An exhaust port 16 is provided at the upper end of the heating furnace 14, and an analysis target gas generated from the sample by heating is supplied to the gas analysis unit 80 from the exhaust port 16 via the transfer tube 23 of the gas transfer unit 20.

This embodiment is configured such that the gas generated by thermogravimetry in the thermal analysis device 10 (TG device) is transferred as an analysis target gas to the gas analysis unit 80 via the transfer tube 23. However, the present disclosure is not limited to this aspect. The thermal analysis device 10 may be, for example, a differential thermal analyzer (DTA), a differential scanning calorimeter (DSC), or a TG-DTA that performs TG and DTA simultaneously (STA), other than the TG device. This embodiment may be configured such that an analysis target gas generate by heating a sample using, for example, a heating furnace such as a constant-temperature dryer with forced convection system (oven), or a heating furnace-type pyrolyzer, instead of the thermal analysis device 10, is transferred to the gas analysis unit 80 via the transfer tube 23.

The analysis target gas generated during thermal analysis in the thermal analysis device 10 is supplied to the gas transfer unit 20 included in the analysis system 100, as illustrated in FIG. 1. The gas transfer unit 20 transfers the analysis target gas from the thermal analysis device 10 to the heating unit 28 while keeping the analysis target gas at an appropriate temperature, and discharges a gas that is not transferred to the heating unit 28, from a discharge port 21a.

FIG. 1 illustrates one example of the configuration of the gas transfer unit 20. The gas transfer unit 20 includes: a heating adapter 21 that receives the analysis target gas supplied from the thermal analysis device 10 and heats the analysis target gas at a predefined temperature; a transfer tube 23 that transfers the analysis target gas to the gas analysis unit 80 via the heating unit 28; and a heating tube 24 that covers at least a part of the transfer tube 23 from the outside in the radial direction to heat the transfer tube 23.

The heating adapter 21 heats the analysis target gas from the thermal analysis device 10 at a predefined temperature. On the side of the heating adapter 21 that faces an inlet port 21b of the analysis target gas, the transfer tube 23 that transfers the analysis target gas to the gas analysis unit 80 via the heating unit 28 is attached by a first joint 22. The first joint 22, which is made by combining, for example, a joint body, a ferrule that forms a seal, and a fastening nut, fixes the transfer tube 23 to the heating adapter 21 in a state where the end on the thermal analysis device 10 side of the transfer tube 23 is positioned in the inlet port 21b of the heating adapter 21 and/or in the exhaust port 16 of the heating furnace 14.

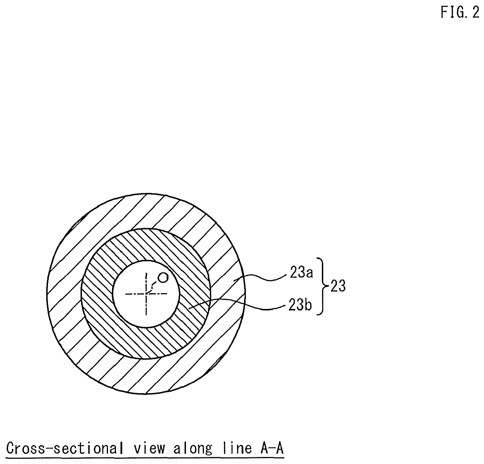

The transfer tube 23 includes: a tube-shaped outer cylinder portion 23a formed of stainless steel; and a tube-shaped inner cylinder portion 23b formed of polytetrafluoroethylene (PTFE), which is arranged inside the outer cylinder portion 23a in the radial direction, as illustrated as a cross-sectional view in FIG. 2. The outer cylinder portion 23a and the inner cylinder portion 23b are arranged concentrically around a central axis O. FIG. 2 illustrates the inner surface of the outer cylinder portion 23a and the outer peripheral surface of the inner cylinder portion 23b as being in close contact with one another. However, a clearance may be provided as appropriate so that the inner cylinder portion 23b is easily inserted from the end of the outer cylinder portion 23a in the longitudinal direction.

In this embodiment, the outside in the radial direction is a direction that separates from the central axis O along the straight line that passes the central axis O of the transfer tube 23 in FIG. 2 and that is normal to the central axis O, while the inside in the radial direction means a direction toward the central axis O along this straight line. The circumferential direction is a rotational direction around the central axis O.

Conventionally, quartz glass, stainless steel, or the like is used as the material of a transfer tube. However, quartz sometimes reacts in a solution of a fluorine, phosphoric acid, or alkali compound or an atmosphere thereof. When stainless steel is used as the material of a transfer tube, stainless steel sometimes reacts with a chlorine-based gas. On the other hand, when PTFE is used as the material of a transfer tube, the reaction of the transfer tube with a fluorine, phosphoric acid, or alkali compound or a chlorine-based gas can be suppressed, but PTFE sometimes transmits oxygen from the outside to the inside of the transfer tube to affect the analysis result.

In this embodiment, the transfer tube 23 includes the outer cylinder portion 23a formed of metal and the inner cylinder portion 23b formed of fluororesin. Therefore, the analysis target gas does not react with the inner cylinder portion 23b formed of fluororesin, which can suppress the effect on the analysis result of the analysis target gas. Moreover, the arrangement of the outer cylinder portion 23a made of metal can effectively suppress the transmission of outside oxygen into the transfer tube 23.

In the transfer tube 23, to easily connect the thermal analysis device 10 to the heating unit 28 and/or the gas analysis unit 80, the length in the central axis O direction (longitudinal direction) is preferably 50 cm or more, and further preferably 3 m or more.

In the outer cylinder portion 23a, for example, the diameter of the inner surface is preferably 2 mm or less. With such a configuration, the outer cylinder portion 23a can easily ensure flexibility required for the transfer tube 23 while internally containing the inner cylinder portion 23b having an inner diameter of 0.05 mm or more and 0.8 mm or less, as described later. Moreover, this embodiment produces a remarkable effect when the diameter of the inner surface of the outer cylinder portion 23a is 0.8 mm or less. This embodiment can use, for example, an outer cylinder portion 23a having an outer diameter of 1/16 inch and an inner diameter of 0.8 mm. As a result of keen study, the inventor of the present application found that, when the inner diameter of the outer cylinder portion 23a is 0.8 mm or less and the length in the central axis O direction (longitudinal direction) of the transfer tube 23 is 50 cm or more, it is difficult to coat the inner surface of the outer cylinder portion 23a made of stainless steel with fluororesin such as PTFE, and it is preferably to form a transfer tube 23 by inserting a tube made of fluororesin as the inner cylinder portion 23b into the inside of the outer cylinder portion 23a, as in this embodiment. Moreover, the diameter of the inner surface of the inner cylinder portion 23b is preferably 0.05 mm or more and 0.8 mm or less. This embodiment can use, for example, an inner cylinder portion 23b having an outer diameter of 0.8 mm and an inner diameter of 0.3 mm. With such a configuration, the inner cylinder portion 23b can be functioned as a capillary tube to transfer the analysis target gas by a pressure difference at the end of the transfer tube 23. To ensure a practical gas flow rate, the diameter of the inner surface of the inner cylinder portion 23b is preferably 0.05 mm or more.

The fluororesin that can be used for the inner cylinder portion 23b is not limited to polytetrafluoroethylene (PTFE) and may be, for example, other fluororesin such as modified polytetrafluoroethylene, perfluoroalkoxyalkane (PFA), ethylene-tetrafluoroethylene (ETFE), fluorinated ethylene propylene (FEP), or polyvinylidene fluoride (PVDF). It is preferable that the inner cylinder portion 23b contains at least any one of the above fluororesins.

The metal that can be used for the outer cylinder portion 23a is not limited to stainless steel and may be, for example, other various metals having excellent corrosion resistance and gas barrier property, such as copper or aluminum.

A clearance may be provided between the inner surface of the outer cylinder portion 23a and the outer peripheral surface of the inner cylinder portion 23b to the extent that the inner cylinder portion 23b can be easily inserted into the inside of the outer cylinder portion 23a from the end of the outer cylinder portion 23a in the longitudinal direction.

In this embodiment, as illustrated in FIG. 1, a part of the transfer tube 23 can be covered by the heating tube 24, thereby heating the analysis target gas passing through the transfer tube 23. The heating adapter 21 has the discharge port 21a as illustrated in FIG. 1, and the analysis target gas that has not been sucked by the transfer tube 23 is discharged from the discharge port 21a.

The other end of the transfer tube 23 is fixed to the gas analysis unit 80 such as a mass spectrometer by a second joint 82 via the heating unit 28 such as an oven, as illustrated in FIG. 1. The heating unit 28 is, for example, a constant-temperature dryer with forced convection system, which can more accurately keep the temperature of the transfer tube 23 at a predefined temperature. This can maintain the temperature inside the transfer tube 23 at a temperature at which the analysis target gas to be transferred does not condense before being introduced into the gas analysis unit 80.

In this embodiment, the analysis target gas supplied to the gas analysis unit 80 via the transfer tube 23 is sucked by the gas analysis unit 80. Then, the remaining analysis target gas that has not been sucked into the gas analysis unit 80, and the carrier gas from the thermal analysis device 10 are discharged to the outside from the discharge port 21a. In this manner, the analysis target gas discharged from the thermal analysis device 10 is naturally branched into the gas analysis path and the external discharge path.

Thus, the carrier gas introduced into the thermal analysis device 10 can be set completely independent of the analysis target gas in type, flow rate, gas pressure, etc. Therefore, the thermal analysis in the thermal analysis device 10 can be performed with measurements under the same conditions as when there is no connection with the gas analysis unit 80.

The inner cylinder portion 23b of the transfer tube 23 is a capillary tube having an inner diameter of 0.05 mm or more and 0.8 mm or less, for example, and capable of transferring the analysis target gas by a pressure difference at the end. In this embodiment, the inside of the heating furnace 14 of the thermal analysis device 10 has a pressure close to the atmospheric pressure, whereas the ionizer of the gas analysis unit 80 (mass spectrometer) is in a high vacuum. Thus, by this pressure difference, the analysis target gas from the heating furnace 14 can be supplied to the gas analysis unit 80. Note that the analysis target gas does not necessarily have to be supplied to the gas analysis unit 80 only by the transfer tube 23 having a two-layer structure, and may be connected to the gas analysis unit 80 via a valve or the like, for example. Also in this case, it is preferable that oxygen or the like does not transmit from the outside via the connection unit with the valve and that no material that reacts with the analysis target gas at the connection unit with the valve is used. Moreover, the analysis target gas discharged from the thermal analysis device 10 may be branched into and transferred to a plurality of flow paths by, for example, a three-way joint. Also in this case, at least one flow path after branching is connected to the gas analysis unit 80 by this transfer tube 23 having a two-layer structure.

The gas analysis unit 80 (mass spectrometer) performs mass spectrometry of the analysis target gas supplied from the thermal analysis device 10. The gas analysis unit 80 includes an ionizer for ionizing the supplied analysis target gas, an electrode for forming an electric field, and an ion detector.

The gas analysis unit 80 is not limited to the above mass spectrometer and may be, for example, a gas chromatography mass spectrometer (GC/MS), a gas chromatograph time-of-flight mass spectrometer (GC/TOFMS), a time-of-flight mass spectrometer (TOFMS), or a quadrupole mass spectrometer (QMS).

As described above, this embodiment is configured to be a tube (transfer tube 23) for supplying an analysis target gas discharged from a thermal analysis device 10, a heating furnace, or a heating furnace-type pyrolyzer to a gas analysis unit 80, the tube including an outer cylinder portion 23a formed of metal and an inner cylinder portion 23b formed of fluororesin, the inner cylinder portion 23b being arranged inside the outer cylinder portion 23a in the radial direction. By adopting such a configuration, the transfer tube 23 includes the outer cylinder portion 23a formed of metal and the inner cylinder portion 23b formed of fluororesin. Thus, the analysis target gas does not react with the inner cylinder portion 23b formed of fluororesin, which can suppress the effect on the analysis result of the analysis target gas. Moreover, the arrangement of the outer cylinder portion 23a made of metal can effectively suppress the transmission of outside oxygen into the transfer tube 23, which can suppress the effect on the analysis result of the analysis target gas.

This embodiment is configured such that the inner cylinder portion 23b contains at least any one of polytetrafluoroethylene, modified polytetrafluoroethylene, perfluoroalkoxyalkane, ethylene-tetrafluoroethylene, fluorinated ethylene propylene, or polyvinylidene fluoride. By adopting such a configuration, the use of such a material that particularly has excellent heat resistance, chemical resistance, formability to a tube, etc. among fluororesins for the inner cylinder portion 23b can suppress the reaction with the inner cylinder portion 23b of the analysis target gas to effectively suppress the effect on the analysis result.

This embodiment is configured such that the outer cylinder portion 23a contains at least any one of stainless steel, copper, or aluminum. By adopting such a configuration, the use of such a material that particularly has excellent corrosion resistance and is inexpensive among metals having excellent gas barrier property for the outer cylinder portion 23a can effectively suppress the effect on the analysis result due to the transmission of oxygen, etc. from the outside into the transfer tube 23.

This embodiment is configured such that the diameter of the inner surface of the outer cylinder portion 23a is 2 mm or less. By adopting such a configuration, the outer cylinder portion 23a can easily ensure flexibility required for the transfer tube 23 while internally containing the inner cylinder portion 23b having an inner diameter of 0.05 mm or more and 0.8 mm or less. Note that the diameter of the inner surface of the outer cylinder portion 23a is preferably 0.5 mm or more in terms of ensuring a clearance between the inner surface of the outer cylinder portion 23a and the outer surface of the inner cylinder portion 23b.

This embodiment is configured such that the length of the transfer tube 23 in the longitudinal direction is 50 cm or more. By adopting such a configuration, the thermal analysis device 10 can be easily connected to the heating unit 28 and/or the gas analysis unit 80.

This embodiment is configured such that the diameter of the inner surface of the inner cylinder portion 23b is 0.8 mm or less. By adopting such a configuration, the inner cylinder portion 23b can be functioned as a capillary tube to transfer the analysis target gas by a pressure difference at the end of the transfer tube 23. To ensure a practical gas flow rate, the diameter of the inner surface of the inner cylinder portion 23b is further preferably 0.05 mm or more.

The analysis system 100 according to this embodiment is configured to include: a thermal analysis device 10, a heating furnace, or a heating furnace-type pyrolyzer; a gas analysis unit 80 that analyzes an analysis target gas discharged from the thermal analysis device 10, the heating furnace, or the heating furnace-type pyrolyzer; and a tube (transfer tube 23) for supplying the analysis target gas discharged from the thermal analysis device 10, the heating furnace, or the heating furnace-type pyrolyzer to the gas analysis unit 80, the tube including an outer cylinder portion 23a formed of metal and an inner cylinder portion 23b formed of fluororesin, the inner cylinder portion 23b being arranged inside the outer cylinder portion 23a in the radial direction. By adopting such a configuration, the transfer tube 23 includes the outer cylinder portion 23a formed of metal and the inner cylinder portion 23b formed of fluororesin. Thus, the analysis target gas does not react with the inner cylinder portion 23b formed of fluororesin, which can suppress the effect on the analysis result of the analysis target gas. Moreover, the arrangement of the outer cylinder portion 23a made of metal can effectively suppress the transmission of outside oxygen into the transfer tube 23, which can suppress the effect on the analysis result of the analysis target gas.

Next, a second embodiment of the present disclosure will be described in detail with reference to the drawings.

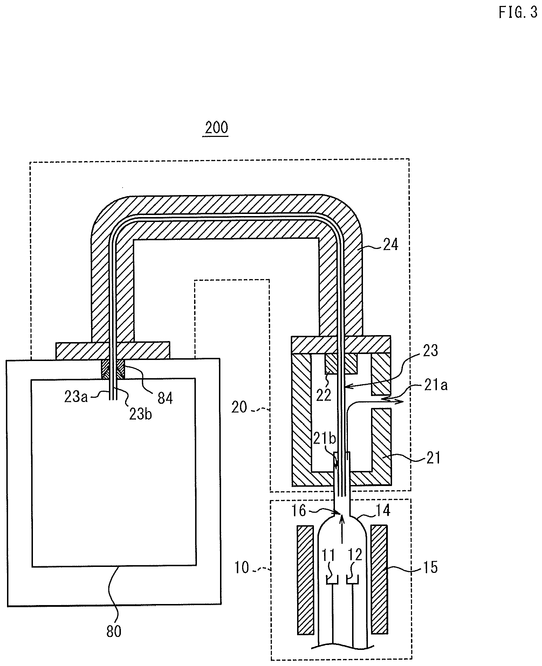

FIG. 3 is a view illustrating the configuration of an analysis system 200 according to the second embodiment of the present disclosure. The analysis system 200 according to this embodiment includes: a thermal analysis device 10 such as a TG device; a gas analysis unit 80 for performing mass spectrometry, etc. on an analysis target gas that is generated and discharged by thermal analysis in the thermal analysis device 10; and a gas transfer unit 20 including a transfer tube 23 (tube) for transferring the analysis target gas discharged from the thermal analysis device 10 to the gas analysis unit 80.

In this embodiment, compared with the first embodiment, the analysis system 200 does not include a heating unit 28, and the transfer tube 23 that transfers the analysis target gas has one end fixed to the heating adapter 21 by the first joint 22 and the other end fixed to the gas analysis unit 80 by a third joint 84 without passing through the heating unit 28. In this embodiment, the analysis target gas can be heated to a predefined temperature in the heating adapter 21 and the heating tube 24 without passing through the heating unit 28 to maintain the temperature of the analysis target gas at a temperature at which the analysis target gas does not condense before being introduced into the gas analysis unit 80.

In this embodiment, the transfer tube 23 does not pass through the heating unit 28. Thus, the length of the transfer tube 23 can be shortened to further easily suppress the penetration of oxygen, etc. from the outside.

Next, a third embodiment of the present disclosure will be described in detail with reference to the drawings.

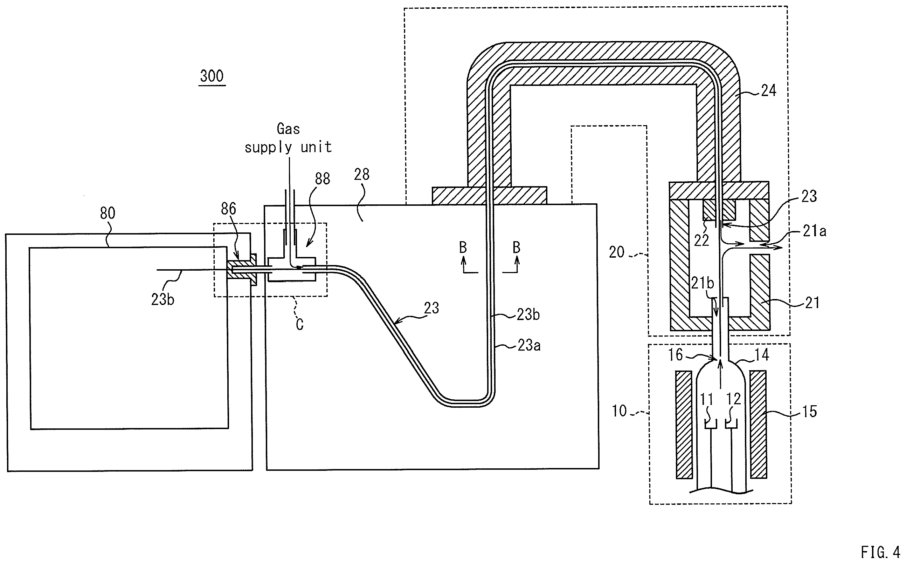

FIG. 4 is a view illustrating the configuration of an analysis system 300 according to the third embodiment of the present disclosure. The analysis system 300 according to this embodiment includes: a thermal analysis device 10 such as a TG device; a gas analysis unit 80 for performing mass spectrometry, etc. on an analysis target gas that is generated and discharged by thermal analysis in the thermal analysis device 10; a gas transfer unit 20 including a transfer tube 23 (tube) for transferring the analysis target gas discharged from the thermal analysis device 10 to the gas analysis unit 80; and a heating unit 28, such as an oven, that heats the analysis target gas before supplying it to the gas analysis unit 80.

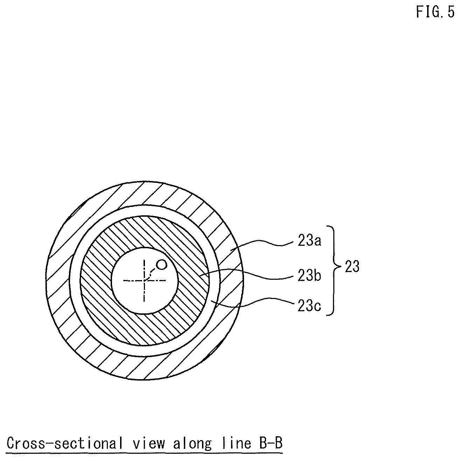

In this embodiment, compared with the first embodiment, as illustrated in FIG. 5, a clearance flow path 23c through which an inert gas passes is provided between the inner surface of the outer cylinder portion 23a and the outer peripheral surface of the inner cylinder portion 23b. In this embodiment, the clearance flow path 23c can be formed, for example, such that the diameter of the inner surface of the outer cylinder portion 23a is larger than the diameter of the outer peripheral surface of the inner cylinder portion 23b by a predefined length. The clearance flow path 23c may be configured, for example, such that, by providing projecting ribs that project inside in the radial direction from the inner surface of the outer cylinder portion 23a or project outside in the radial direction from the outer peripheral surface of the inner cylinder portion 23b and are intermittently arranged in the circumferential direction, clearances are forced to be provided at positions in the circumferential direction between the projecting ribs to certainly form a clearance flow path 23c. In this embodiment, to provide a clearance flow path 23c between the outer cylinder portion 23a and the inner cylinder portion 23b, the diameter of the inner surface of the outer cylinder portion 23a is set greater, compared with the first and second embodiments. The diameter of the inner surface of the outer cylinder portion 23a is preferably, for example, 8 mm or less.

The inert gas to be passed through between the inner surface of the outer cylinder portion 23a and the outer peripheral surface of the inner cylinder portion 23b is, for example, argon gas, helium gas, etc.

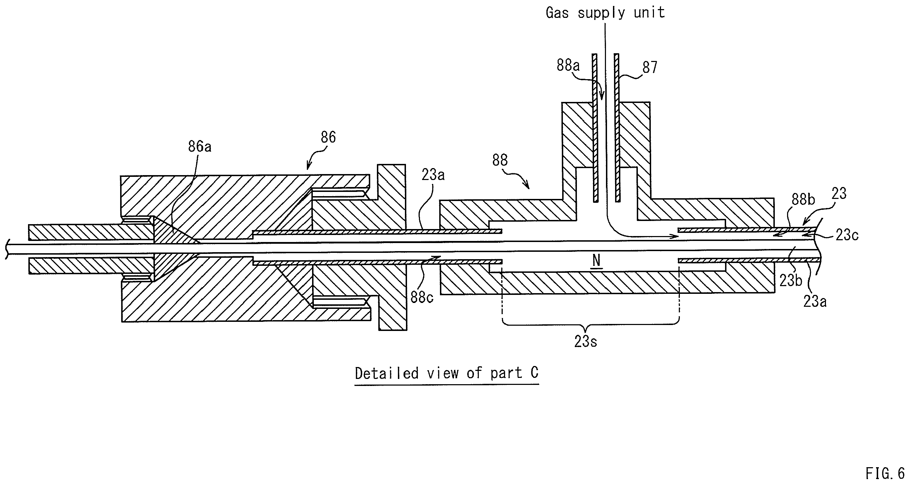

The inert gas to be passed through between the inner surface of the outer cylinder portion 23a and the outer peripheral surface of the inner cylinder portion 23b is, for example, supplied by providing a T-joint 88 having an inert gas supply port 88a on the upstream side (right side in FIG. 6) of a fourth joint 86 that fixes the end on the gas analysis unit 80 side of the transfer tube 23 to the gas analysis unit 80, as illustrated in FIG. 6.

The T-joint 88 is an approximate T-shaped tube joint arranged in the heating unit 28, as illustrated in FIG. 4. As illustrated in FIG. 6, the T-joint 88 includes: a first through opening 88b and a second through opening 88c that the transfer tube 23, thorough which the analysis target gas from the thermal analysis device 10 passes, penetrates; and the inert gas supply port 88a that is directed in a direction perpendicular to the transfer tube 23 and to which the inert gas from the gas supply unit is supplied.

The transfer tube 23 is fixed to the first through opening 88b and the second through opening 88c in a penetrated state. The transfer tube 23 fixed to the first through opening 88b and the second through opening 88c has a single tube area 23s in which only the outer cylinder portion 23a is removed, in an internal space N of the T-joint 88. The inert gas supplied from the inert gas supply port 88a is supplied to the clearance flow path 23c between the outer cylinder portion 23a and the inner cylinder portion 23b through this single tube area 23s in the transfer tube 23. To prevent the inert gas supplied from the inert gas supply port 88a from flowing to the gas analysis unit 80 side, the inner cylinder portion 23b is swaged and sealed by a ferrule 86a in the fourth joint 86.

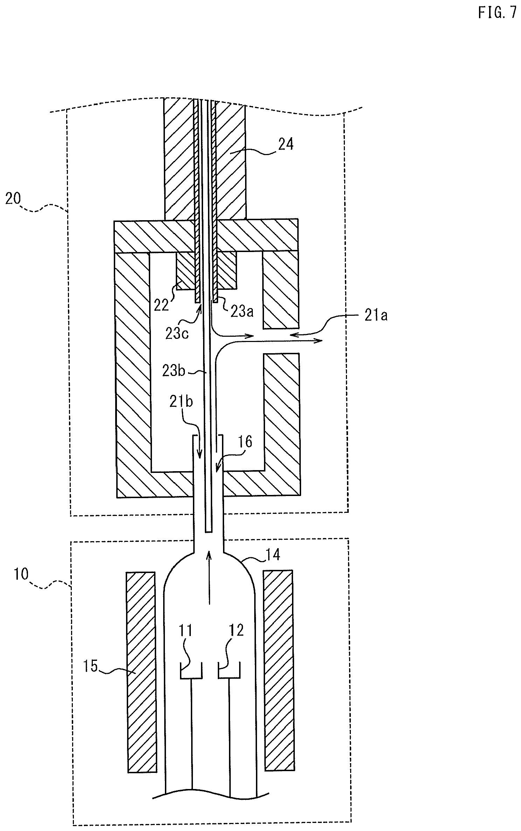

The inert gas supplied to the clearance flow path 23c between the outer cylinder portion 23a and the inner cylinder portion 23b through the single tube area 23s transfers into the heating adapter 21 though the inside of the heating unit 28 and the heating tube 24. The outer cylinder portion 23a of the transfer tube 23 terminates in the heating adapter 21, and only the inner cylinder portion 23b penetrates the heating adapter 21 and extends to the heating furnace 14 of the thermal analysis device 10, as illustrated in FIG. 7.

In the transfer tube 23, the inner cylinder portion 23b is covered by the outer cylinder portion 23a excluding the inside of the T-joint 88, as illustrated in FIGS. 4, 6, and 7. The inert gas is supplied to the clearance flow path 23c between the outer cylinder portion 23a and the inner cylinder portion 23b. The internal space N of the T-joint 88 is also filled with the inert gas supplied from the inert gas supply port 88a. Therefore, the analysis target gas discharged from the thermal analysis device 10 is supplied to the gas analysis unit 80 through the inner cylinder portion 23b made of fluororesin, which is covered with the inert gas. Thus, this can further effectively suppress the effect on the analysis result due to the transmission into the inner cylinder portion 23b of the gas that affects the gas analysis, such as oxygen, etc. from the outside.

In this embodiment, the inert gas is supplied to the clearance flow path 23c between the outer cylinder portion 23a and the inner cylinder portion 23b, and the analysis target gas is supplied to the gas analysis unit 80 through the inner cylinder portion 23b made of fluororesin, which is covered with the inert gas. Therefore, the outer cylinder portion 23a does not necessarily have to be formed of a metal material having excellent gas barrier property and may be formed of a material other than metal.

The end on the gas analysis unit 80 side of the outer cylinder portion 23a of the transfer tube 23 terminates in the fourth joint 86, as illustrated in FIG. 6. On the other hand, the inner cylinder portion 23b of the transfer tube 23 penetrates the fourth joint 86 and extends to the inside of the gas analysis unit 80, as illustrated in FIG. 4. With this configuration, the analysis target gas discharged from the thermal analysis device 10 is supplied to the gas analysis unit 80 through the inside of the inner cylinder portion 23b. As the fourth joint 86, a diameter conversion joint can be used to convert the outer diameter of the outer cylinder portion 23a into the outer diameter of the inner cylinder portion 23b.

Detailed illustration is submitted, but the transfer tube 23 is fixed to the first through opening 88b and the second through opening 88c by combining a ferrule that seals the outer peripheral surface and a fastening nut that fixes the transfer tube 23 to the joint main body. Moreover, an inert gas supply tube 87 (see FIG. 6) that is fixed to the inside of the inert gas supply port 88a directed in the direction perpendicular to the transfer tube 23 is also fixed to the inert gas supply port 88a by combining a ferrule that seals the outer peripheral surface and a fastening nut that fixes the inert gas supply tube 87 to the joint main body.

In this embodiment, as illustrated in FIG. 7, the outer cylinder portion 23a of the transfer tube 23 terminates in the heating adapter 21, and only the inner cylinder portion 23b extends to the inside of the heating furnace 14 of the thermal analysis device 10. The inert gas that has reached the inside of the heating adapter 21 through the clearance flow path 23c of the transfer tube 23 is discharged to the outside from the discharge port 21a.

As described above, this embodiment is configured such that a space to which the inert gas can be supplied from the outside is provided between the inner cylinder portion 23b and the outer cylinder portion 23a. By adopting such a configuration, the transfer tube 23 includes the inner cylinder portion 23b that is covered with the inert gas and formed of fluororesin. Thus, the analysis target gas does not react with the inner cylinder portion 23b formed of fluororesin, which can suppress the effect on the analysis result of the analysis target gas. Moreover, covering the inner cylinder portion 23b with the inert gas can effectively suppress the transmission of outside oxygen into the transfer tube 23, which can suppress the effect on the analysis result of the analysis target gas.

The analysis system 300 according to this embodiment is configured to include: a thermal analysis device 10, a heating furnace, or a heating furnace-type pyrolyzer; a gas analysis unit 80 that analyzes an analysis target gas discharged from the thermal analysis device 10, the heating furnace, or the heating furnace-type pyrolyzer; and a tube (transfer tube 23) for supplying the analysis target gas discharged from the thermal analysis device 10, the heating furnace, or the heating furnace-type pyrolyzer to the gas analysis unit 80, the tube including a tubular outer cylinder portion 23a and an inner cylinder portion 23b formed of fluororesin, the inner cylinder portion 23b being arranged inside the outer cylinder portion 23a in the radial direction, and an inert gas from the outside being supplied to a space between the inner cylinder portion 23b and the outer cylinder portion 23a. By adopting such a configuration, the transfer tube 23 includes the inner cylinder portion 23b that is covered with the inert gas and formed of fluororesin. Thus, the analysis target gas does not react with the inner cylinder portion 23b formed of fluororesin, which can suppress the effect on the analysis result of the analysis target gas. Moreover, covering the inner cylinder portion 23b with the inert gas can effectively suppress the transmission of outside oxygen into the transfer tube 23, which can suppress the effect on the analysis result of the analysis target gas.

Although the present disclosure has been described with reference to the drawings and examples, it will be appreciated by a skilled person that various modifications or alterations may be made based on the present disclosure. Therefore, it should be noted that such modifications or alterations are within the scope of the present invention. For example, the functions included in each component and each step may be rearranged without being logically inconsistent, and a plurality of components and steps may be combined into one or divided.

For example, this embodiment is configured such that the transfer tube 23 having a two-layer structure connects the thermal analysis device 10 to the gas analysis unit 80. However, even if there is a region in which the outer cylinder portion 23a is not provided, in the way, the embodiment just has to ensure the gas barrier property by setting this region to have an extremely short length in the axis direction, such as a connection unit between tubes, or by providing a means other than the outer cylinder portion 23a to prevent oxygen, etc. from transmitting into the inner cylinder portion 23b.

The cross-section shape of the transfer tube 23 is not limited to a concentrically annular shape as illustrated in FIG. 2 and FIG. 5 and may be another cross-section shape such as a bilaminar elliptical shape or a rectangular shape. The transfer tube 23 may be composed of three or more layers having a further cylinder portion outside or inside the outer cylinder portion 23a.

### REFERENCE SIGNS LIST

- 10: thermal analysis device
- 11, 12: sample container
- 14: heating furnace
- 15: heater
- 16: exhaust port
- 20: gas transfer unit
- 21: heating adapter
- 21a: discharge port
- 21b: inlet port
- 22: first joint
- 23: transfer tube (tube)
- 23a: outer cylinder portion
- 23b: inner cylinder portion
- 23c: clearance flow path
- 23s: single tube area
- 24: heating tube
- 28: heating unit
- 80: gas analysis unit
- 82: second joint
- 84: third joint
- 86: fourth joint
- 86a: ferrule
- 87: inert gas supply tube
- 88: T-joint
- 88a: inert gas supply port
- 88b: first through opening
- 88c: second through opening
- 100, 200, 300: analysis system
- N: internal space
- O: central axis

## Claims

1. A tube for supplying an analysis target gas discharged from a thermal analysis device, a heating furnace, or a heating furnace-type pyrolyzer to a gas analysis unit, the tube comprising:
an outer cylinder portion formed of metal; and
an inner cylinder portion formed of fluororesin, the inner cylinder portion being arranged inside the outer cylinder portion in the radial direction.

2. The tube according to claim 1, wherein the inner cylinder portion contains at least any one of polytetrafluoroethylene, modified polytetrafluoroethylene, perfluoroalkoxyalkane, ethylene-tetrafluoroethylene, fluorinated ethylene propylene, or polyvinylidene fluoride.

3. The tube according to claim 1 or 2, wherein the outer cylinder portion contains at least any one of stainless steel, copper, or aluminum.

4. The tube according to any one of claims 1 to 3, wherein the outer cylinder portion has an inner surface with a diameter of 2 mm or less.

5. The tube according to any one of claims 1 to 4, having a length in the longitudinal direction of 50 cm or more.

6. The tube according to any one of claims 1 to 5, wherein the inner cylinder portion has an inner surface with a diameter of 0.8 mm or less.

7. The tube according to any one of claims 1 to 6, wherein a space to which an inert gas is suppliable from the outside is provided between the inner cylinder portion and the outer cylinder portion.

8. An analysis system comprising:
a thermal analysis device, a heating furnace, or a heating furnace-type pyrolyzer;
a gas analysis unit that analyzes an analysis target gas discharged from the thermal analysis device, the heating furnace, or the heating furnace-type pyrolyzer; and
a tube for supplying the analysis target gas discharged from the thermal analysis device, the heating furnace, or the heating furnace-type pyrolyzer to the gas analysis unit,
wherein the tube includes:
an outer cylinder portion formed of metal; and
an inner cylinder portion formed of fluororesin, the inner cylinder portion being arranged inside the outer cylinder portion in the radial direction.

9. The analysis system according to claim 8, wherein an inert gas is supplied from the outside to a space between the inner cylinder portion and the outer cylinder portion.

10. An analysis system comprising:
a thermal analysis device, a heating furnace, or a heating furnace-type pyrolyzer;
a gas analysis unit that analyzes an analysis target gas discharged from the thermal analysis device, the heating furnace, or the heating furnace-type pyrolyzer; and
a tube for supplying the analysis target gas discharged from the thermal analysis device, the heating furnace, or the heating furnace-type pyrolyzer to the gas analysis unit,
wherein the tube includes:
a tubular outer cylinder portion; and
an inner cylinder portion formed of fluororesin, the inner cylinder portion being arranged inside the outer cylinder portion in the radial direction, and
an inert gas is supplied from the outside to a space between the inner cylinder portion and the outer cylinder portion.

## Amended claims

### Amended claims in accordance with Rule 137(2) EPC.

1. A tube (23) for supplying an analysis target gas discharged from a thermal analysis device (10), a heating furnace, or a heating furnace-type pyrolyzer to a gas analysis unit (80), the tube (23) comprising:
an outer cylinder portion (23a) formed of metal; and
an inner cylinder portion (23b), the inner cylinder portion (23b) being arranged inside the outer cylinder portion (23a) in the radial direction,
**characterized in that**:
the inner cylinder portion (23b) is formed of fluororesin,
the tube (23) has a length in the longitudinal direction of 50 cm or more, and
the inner cylinder portion (23b) has an inner surface with a diameter of 0.8 mm or less.

2. The tube (23) according to claim 1, wherein the inner cylinder portion (23b) contains at least any one of polytetrafluoroethylene, modified polytetrafluoroethylene, perfluoroalkoxyalkane, ethylene-tetrafluoroethylene, fluorinated ethylene propylene, or polyvinylidene fluoride.

3. The tube (23) according to claim 1 or 2, wherein the outer cylinder portion (23a) contains at least any one of stainless steel, copper, or aluminum.

4. The tube (23) according to any one of claims 1 to 3, wherein the outer cylinder portion (23a) has an inner surface with a diameter of 2 mm or less.

5. The tube (23) according to any one of claims 1 to 4, wherein a space to which an inert gas is suppliable from the outside is provided between the inner cylinder portion (23b) and the outer cylinder portion (23a).

6. An analysis system (100, 200, 300) comprising:
a thermal analysis device (10), a heating furnace, or a heating furnace-type pyrolyzer;
a gas analysis unit (80) that analyzes an analysis target gas discharged from the thermal analysis device (10), the heating furnace, or the heating furnace-type pyrolyzer; and
the tube (23) according to any one of claims 1 to 5 for supplying the analysis target gas discharged from the thermal analysis device (10), the heating furnace, or the heating furnace-type pyrolyzer to the gas analysis unit (80).

7. The analysis system (300) according to claim 6, wherein an inert gas is supplied from the outside to a space between the inner cylinder portion (23b) and the outer cylinder portion (23a).
